# EUROPEAN PATENT APPLICATION

(11) **EP 4 596 476 A1**
(43) Date of publication of application: **06.08.2025**
(21) Application number: 25155039.8
(22) Date of filing: 30.01.2025
(51) Int. Cl.: B65H 31/24, B65H 31/20, B65H 31/02, B65H 31/30, B65H 31/38

(54) **STACKING DEVICE AND MACHINING PROCESSING DEVICE INCLUDING THE SAME**

(30) Priority: 31.01.2024 JP 2024013284
(71) Applicant: Duplo Seiko Corporation, Kinokawa-shi, Wakayama 649-6551 (JP)
(72) Inventor: SAIKA, Masamichi, Kinokawa-shi, 649-6551 (JP)
(74) Representative: Mewburn Ellis LLP

(57) **Abstract**

A stacking device includes a placement part, a pair of guide members that align the products by performing alignment action on both side edges in an intersectional direction of the products placed on the placement part; and a stacking processor that controls positions of the pair of guide members in the intersectional direction. The products include first products conveyed along a first side edge position, and second products conveyed along a second side edge position following the first products. When the first side edge position and the second side edge position are different in the intersectional direction, the stacking processor controls, based on the first side edge position and the second side edge position, the pair of guide members so that at least one of the pair of guide members moves in the intersectional direction to an interference avoidance position.

## Description

### BACKGROUND

### Technical Field:

The present disclosure relates to a stacking device and a machining processing device equipped with the stacking device.

### Background Art:

For example, JP2987135 discloses a method of stacking sheets, in which a guide member for aligning the side edges of sheets is positioned depending on the positions of plural rows of sheets fed to a table of a stacking device.

The method of JP2987135 relates to a case where the positioning of the guide member in an intersectional direction intersecting the conveyance direction of the product does not change substantially for the duration that the sheets (hereinafter referred to as products) fed to the table are being stacked. In cases where the first product and the second product following the first product are different in position in the intersectional direction, the product may interfere with the guide member. The method of JP2987135, however, does neither disclose nor suggest anything about what the guide member should behave in order to prevent such an interference.

### SUMMARY

Thus, the technical object to be achieved by the present disclosure is to provide a stacking device that prevents the first product and the second product from interfering with the guide member when the first product and the second product are different in position in the intersectional direction.

In order to solve the above technical problem, the present disclosure provides a stacking device which follows.

A stacking device according to an aspect of the present disclosure that aligns in an intersectional direction intersecting a conveyance direction and stacks products conveyed along the conveyance direction on a conveyance path, the stacking device includes:
a placement part on which the products conveyed from the conveyance path are placed;
a pair of guide members that align the products by performing alignment action on both side edges in the intersectional direction of the products placed on the placement part; and
a stacking processor that controls positions of the pair of guide members in the intersectional direction, wherein
the products include:
   i) first products, both edges of which in the intersectional direction on the placement part are at a first side edge position and which are conveyed to the placement part along the conveyance direction, and
   ii) second products, both edges of which in the intersectional direction on the placement part are at a second side edge position and which are conveyed to the placement part along the conveyance direction, following the first products, and
when the first side edge position and the second side edge position are different in the intersectional direction, the stacking processor controls, based on the first side edge position and the second side edge position, the pair of guide members so that at least one of the pair of guide members moves in the intersectional direction to an interference avoidance position where it does not interfere with the first products and the second products.

A machining processing device according to an aspect of the present disclosure includes:
a stacking device for products that aligns and stacks, in an intersectional direction intersecting a conveyance direction, products conveyed along the conveyance direction on a conveyance path; and
a working device disposed upstream of the stacking device in the conveyance direction, wherein
the stacking device includes:
   a placement part on which the products conveyed from the conveyance path are placed,
   a pair of guide members that align the products by performing alignment action on both side edges in the intersectional direction of the products placed on the placement part, and
   a stacking processor that controls positions of the pair of guide members in the intersectional direction, wherein
   the products include:
      i) first products, both edges of which in the intersectional direction on the placement part are at a first side edge position and which are conveyed to the placement part along the conveyance direction, and
      ii) second products, both edges of which in the intersectional direction on the placement part are at a second side edge position and which are conveyed to the placement part along the conveyance direction, following the first products, wherein
when the first side edge position and the second side edge position in the intersectional direction are different, the stacking processor controls, based on the first side edge position and the second side edge position, the pair of guide members so that at least one of the pair of guide members moves to an interference avoidance position in the intersectional direction where it does not interfere with the first products and the second products; and
the working device forms side edges of the first products by cutting a sheet in accordance with a first cutting position corresponding to the first side edge position and forms side edges of the second products by cutting the sheet in accordance with a second cutting position corresponding to the second side edge position.

According to the above configuration, when the positions of the first product and the second product in the intersectional direction are different, at least one of the pair of guide members moves to an interference avoidance position where the pair of guide members do not interfere with the first product and the second product in the intersectional direction based on the first side edge position and the second side edge position. This makes it possible to prevent at least one of the pair of guide members from interfering with the first product and the second product even when the positions of the first product and the second product in the intersectional direction are different.

### BRIEF DESCRIPTION OF DRAWINGS

Fig. 1 is a longitudinal sectional view diagrammatically showing a configuration of a machining processing device according to an embodiment of the present disclosure;
Fig. 2 is a block diagram of a working device and a stacking device in the machining processing device shown in Fig. 1;
Fig. 3 is a perspective view of a stacking device of the machining processing device shown in Fig. 1 when a leading edge regulation part is in its regulating position;
Fig. 4 is a perspective view of the stacking device of the machining processing device shown in Fig. 1 when the leading edge regulation part is in its retracted position;
Fig. 5 is a diagram illustrating a pattern of sheet working by the working device of the machining processing device shown in Fig. 1;
Fig. 6A is a diagram illustrating interference avoidance positions of a pair of guide members when a first product and a second product have the same size in an intersectional direction but when a first side edge position of the first product and a second side edge position of the second product are different in the intersectional direction;
Fig. 6B is a diagram illustrating interference avoidance positions of the pair of guide members when the first product and the second product have the same size in the intersectional direction but when the first side edge position of the first product and the second side edge position of the second product are different in the intersectional direction;
Fig. 7 is a diagram illustrating interference avoidance positions of the pair of guide members when the first product and the second product have different sizes in the intersectional direction and when the first side edge position of the first product and the second side edge position of the second product are different in the intersectional direction;
Fig. 8 is a flowchart illustrating control in the working device and the stacking device;
Fig. 9 is a flowchart illustrating control following Fig. 8;
Fig. 10 is a flowchart illustrating control following Fig. 9;
Fig. 11 is a flowchart illustrating control following Fig. 10; and
Fig. 12 is a flowchart illustrating control following Fig. 11.

### DETAILED DESCRIPTION

An example of the present disclosure will now be described with reference to the accompanying drawings. In the following description, terms indicating specific directions or positions (e.g., terms including "upper", "lower", "right", "left", "front", and "rear") may be used as necessary, but the use of these terms is for the purpose of facilitating understanding of the present disclosure with reference to the drawings, and the meanings of these terms do not limit the technical scope of the present disclosure. In addition, the following description is essentially merely illustrative and is not intended to limit the present disclosure, its application, or its uses. Furthermore, the drawings are diagrammatic, and the ratios of the dimensions do not necessarily correspond to the actual ones.

### Machining processing device

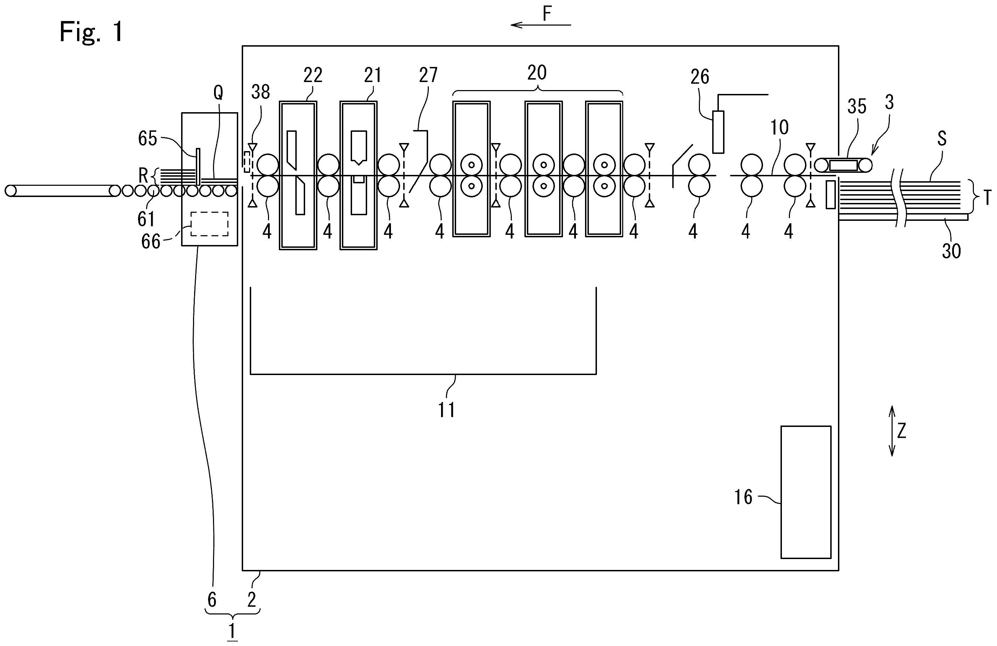

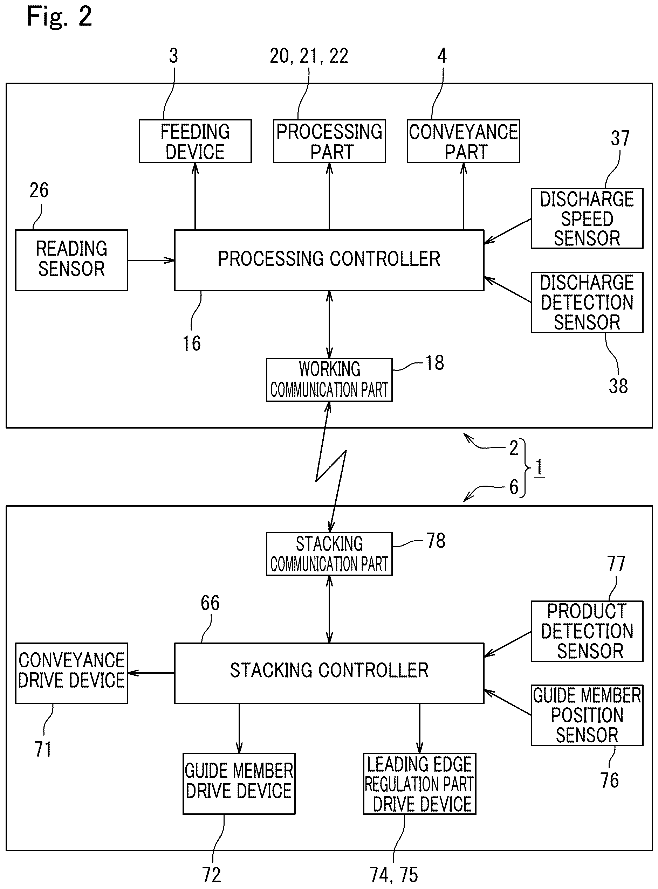

A machining processing device 1 will be described with reference to Fig. 1. Fig. 1 is a longitudinal sectional view that diagrammatically illustrates a configuration of the machining processing device 1 according to an embodiment of the present disclosure. The machining processing device 1 includes a working device 2, a feeding device 3, and a stacking device 6. The machining processing device 1 performs a working process while conveying a sheet S on a conveyance path 10 along a conveyance direction F. The conveyance path 10 extends in the conveyance direction F and an intersectional direction W (shown in Fig. 2) that intersects the conveyance direction F. The feeding device 3 is located upstream of the working device 2 in the conveyance direction F, and the stacking device 6 is located downstream of the working device 2 in the conveyance direction F.

### Feeding Device

As shown in Fig. 1, the feeding device 3 includes a feed table 30 and a suction conveyance part 35. The suction conveyance part 35 sucks the sheets S one by one from a large number of sheets S (stacked sheets T) stacked on the feed table 30 and delivers the sheets S to the working device 2.

### Working Device

As shown in Fig. 1, the working device 2 includes a conveyance part 4, a processing controller (which is an example of a working processor) 16, and a plurality of processing parts 20, 21, and 22. The conveyance part 4 includes a plurality of pairs of conveyance rollers spaced apart a distance from each other and configured to pinch the conveyance path 10 in the vertical direction. Each of the conveyance roller pairs is driven by a power transmission mechanism and a conveyance drive device (both not shown), and each of the conveyance drive devices is controlled by the processing controller 16.

The processing parts 20, 21, and 22 perform various working processes on the sheet S conveyed along the conveyance path 10. The processing parts 20, 21, and 22 include, for example, a slitter 20, a creaser 21, and a cutter 22. The slitter 20 performs cutting along the conveyance direction F. The creaser 21 performs creasing in an intersectional direction W that intersects the conveyance direction F. The cutter 22 performs cutting along the intersectional direction W. The slitter 20, the creaser 21, and the cutter 22 are each configured as a detachable unit and structured so as to be disposed at a desired position of the working device 2 by a cassette system.

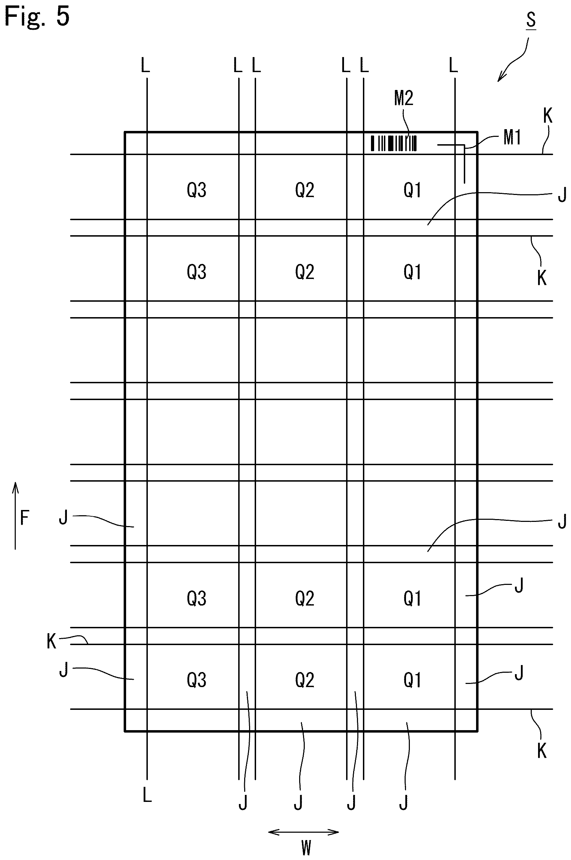

A reading sensor 26 is disposed upstream of the slitter 20. The reading sensor 26 reads an image (shown in Fig. 5) of a position information providing portion (position mark) M1 printed on the front corner of the sheet S to obtain reference position information for working in the conveyance direction F and the intersectional direction W on the sheet S. The position information providing portion (position mark) M1 is a mark indicating a reference position in a print image printed on the sheet S, and printing misalignment and the like on the sheet S is detected based on this position mark M1 and the edge position of the sheet S. The position information providing portion (position mark) M1 may include registration marks (position marks) of various shapes.

The reading sensor 26 also reads an image (shown in Fig. 5) of a working information providing portion (a barcode, a two-dimensional code, or alphanumeric characters as a target for character recognition processing) M2 printed on the leading edge of the sheet S to obtain various types of working process information to be applied to the sheet S. The reading sensor 26 may include a CCD sensor, a CIS sensor, or the like. The reading sensor 26 may also obtain reference position information for working and various types of working process information by performing image recognition processing on the sheet image captured by the camera.

A cutting-scrap removal mechanism 27 is disposed downstream of the slitter 20. A trashcan 11 is disposed at the bottom of the working device 2. Unnecessary cutting scraps J generated by the slitter 20 and the cutter 22 are guided downward by the cutting-scrap removal mechanism 27 and the cutting-scrap dropping gap to be collected in the trashcan 11. A discharge detection sensor 38 is disposed downstream of the cutter 22. The discharge detection sensor 38 detects whether a product Q after working has been discharged to the stacking device 6.

As shown in Fig. 2, the processing controller 16 is electrically connected to the feeding device 3, the conveyance part 4, a working communication part 18, the processing parts 20, 21, and 22, the reading sensor 26, a discharge speed sensor 37, the discharge detection sensor 38, and an operation panel (not shown).

The processing controller 16 has a processor such as CPU and a storage such as RAM and ROM and is electrically connected to the reading sensor 26 and an operation panel. The processing controller 16 controls the overall action of the working device 2. The operation panel serves both as a setting part for setting various pieces of working information (job data itself or a storage location of job data) including information related to cutting work of the sheet S, and as a display part for displaying various pieces of information. -

The processing controller 16 acquires various pieces of information through the reading sensor 26 or the operation panel. The processing controller 16 controls the driving of the feeding device 3, the conveyance part 4, and the processing parts 20, 21, and 22 so as to work the sheet S based on the working information (i.e., job data) of the sheet S acquired through the reading sensor 26 or the operation panel, to produce a plurality of products Q from one sheet S (as shown in Fig. 2).

The discharge speed sensor 37 functioning as a discharge speed detection part detects the discharge speed of the product Q. That is, the discharge speed sensor 37 is an example of the discharge speed detection part. The discharge speed sensor 37 may be configured: to detect the discharge speed from the rotation speed of the discharge conveyance roller; to calculate the discharge speed from the time it takes for the product Q to pass the two sensors spaced apart along the conveyance direction F; or to calculate the discharge speed from the time difference when the leading and trailing edges of the discharged product Q, whose size in the conveyance direction F is known, pass the sensor.

The discharge detection sensor 38 functioning as a discharge detection part is disposed at the most downstream side on the conveyance path 10 and detects the completion of discharge of the product Q onto a placement part 61. That is, the discharge detection sensor 38 is an example of the discharge detection part. The discharge detection sensor 38 is, for example, a reflective optical sensor having a light emitting element and a light receiving element that detects an edge (leading edge or trailing edge) of the discharged product Q. The optical sensor may be of a type other than the reflective type, in which the light emitting element and the light receiving element are disposed at positions facing each other.

### Sheet Working Process

As shown in Fig. 5, a plurality of products Q are produced from one sheet S based on a working pattern of the sheet S. Set as cutting positions constituting the working pattern of the sheet S are a plurality of cutting positions L extending in the conveyance direction F and a plurality of transverse cutting positions K extending in the intersectional direction W that intersects the conveyance direction F.

For example, in Fig. 5, the cutting position L pairs located from the outside to the inside in the intersectional direction W are used, respectively, by the slitter 20 located most upstream in the conveyance direction F, the slitter 20 located at the center in the conveyance direction F, and the slitter 20 located most downstream in the conveyance direction F, in the mentioned order, among the slitters 20. The plurality of transverse cutting positions K extending in the intersectional direction W are used by the cutter 22.

### Stacking Device

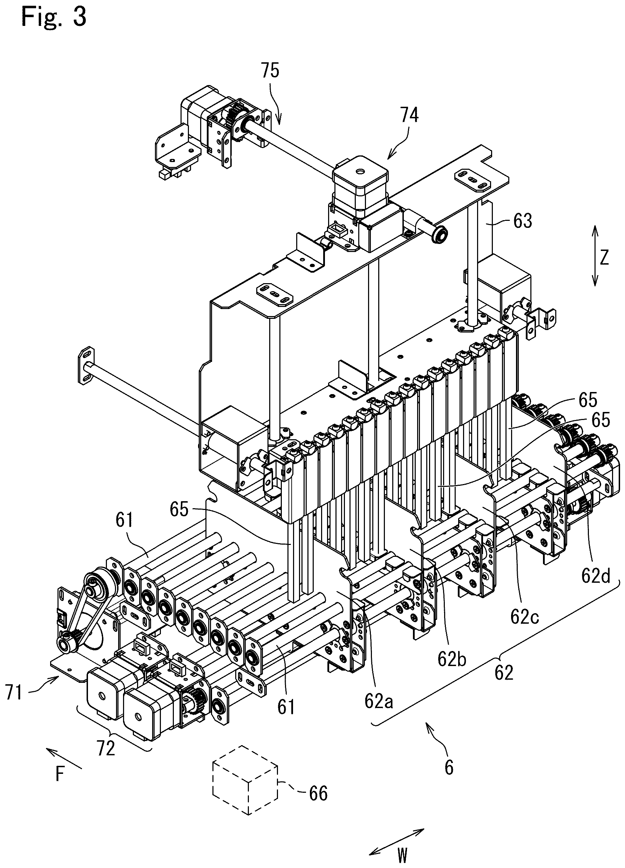

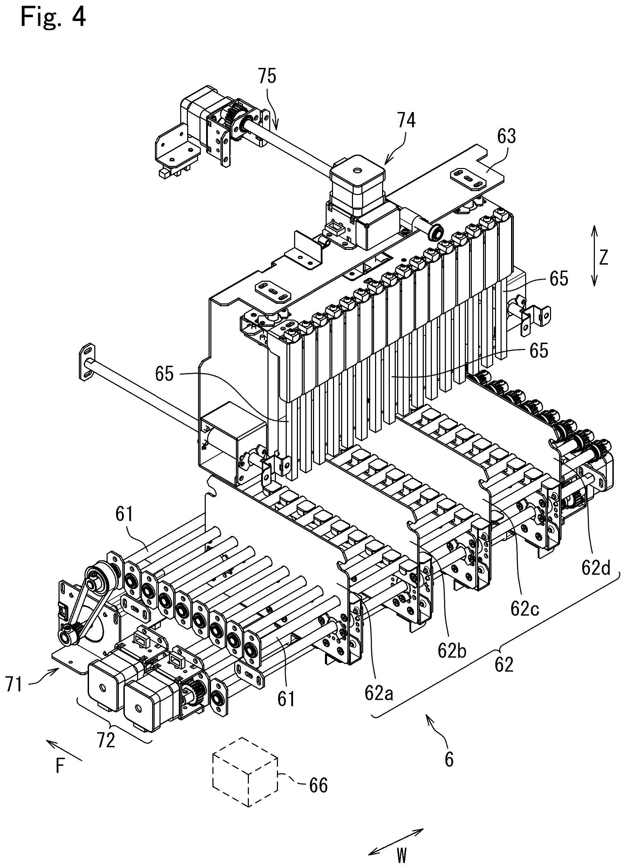

The stacking device 6 will be described with reference to Figs. 3 and 4. The stacking device 6 is disposed downstream of the working device 2 in the conveyance direction F. The products Q worked by the working device 2 are fed from the downstream side of the working device 2, and the products Q fed from the working device 2 are stacked in an aligned state by the stacking device 6.

The stacking device 6 includes the placement part 61, at least one pair of guide members 62, a leading edge regulation part 65, and a stacking controller (which is an example of a stacking processor) 66.

The placement part 61 is configured, for example, by a plurality of placement rollers extending in the intersectional direction W and spaced apart in the conveyance direction F. A flat placement surface is formed by the plurality of placement rollers so that the product Q fed from the working device 2 is supported by the plurality of placement rollers.

The plurality of placement rollers are driven by a conveyance drive device 71. The conveyance drive device 71 includes, for example, a drive motor functioning as a drive device, a pulley attached to the rotating shaft of the drive motor, a pulley attached to the rotating shaft of the placement roller, and a timing belt stretched between the pulley on the drive motor side and the pulley on the placement roller side. The placement part 61 may also be configured as a belt conveyor. Thus, the placement part 61 has a support function for supporting the product Q fed from the working device 2 and a conveyance function for conveying the product Q downstream in the conveyance direction F.

The pair of guide members 62 are plate-shaped bodies extending in the conveyance direction F and a height direction Z. The configuration is such that the products Q to be aligned are positioned between the pair of guide members 62. The guide member 62 has in its side wall a plurality of insertion portions through each of which each of the plurality of placement rollers can be inserted. This allows the guide member 62 to move in the intersectional direction W through the plurality of insertion portions so that the position in the intersectional direction W can be adjusted. Hence, the pair of guide members 62 repeatedly perform abutment and separation actions against and from one side edge and the other side edge in the intersectional direction W of the product Q, i.e., against and from both side edges in the intersectional direction W, thereby performing alignment action (also called jogger action) for aligning the side edges in the intersectional direction W of the product Q.

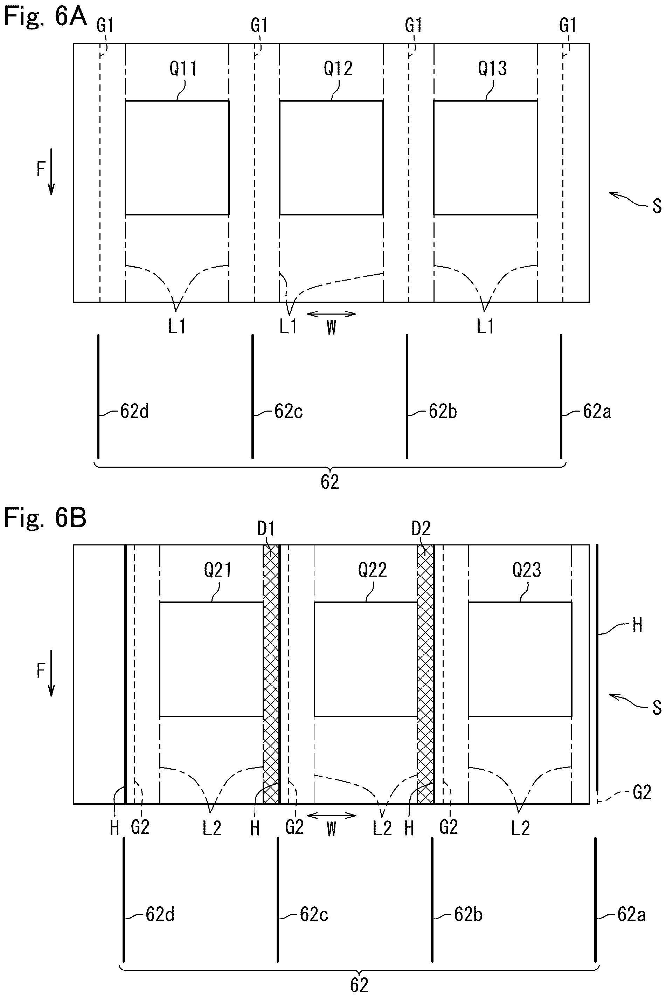

When first products Q11 to Q13 are fed in three rows in the intersectional direction W (as shown in Fig. 6A) and when second products Q21 to Q23 are fed in three rows in the intersectional direction W (as shown in Fig. 6B), for example, four guide members 62, namely, a first guide member 62a, a second guide member 62b, a third guide member 62c, and a fourth guide member 62d are used as shown in Figs. 3 and 4. In Figs. 3 and 4, the side where the fourth guide member 62d is located corresponds to one side in Figs. 6A and 6B, and the side where the first guide member 62a is located corresponds to the other side in Figs. 6A and 6B.

The fourth guide member 62d located on one side in the intersectional direction W is used to align one side edge of the first product Q11 on one side and one side edge of the second product Q21 on one side. The first guide member 62a located on the other side in the intersectional direction W is used to align the other side edge of the first product Q13 on the other side and the other side edge of the second product Q23 on the other side. The third guide member 62c located on the inside in the intersectional direction W is used to align the other side edge of the first product Q11 on one side and the other side edge of the second product Q21 on one side and align one side edge of the first product Q12 at the center and one side edge of the second product Q22 at the center. The second guide member 62b located on the inside in the intersectional direction W is used to align one side edge of the other first product Q13 and one side edge of the other second product Q23 and align the other side edge of the central first product Q12 and the other side edge of the central second product Q22.
This makes it possible to reduce the number of guide members 62.
Note that a configuration may be adopted in which a pair of guide members 62 dedicated to each product Q are used.

A guide member drive device 72 includes, for example, a drive motor that functions as a drive device, a lead screw that is fixed integrally to the rotating shaft of the drive motor, and a lead nut that is screwed onto the lead screw and fixed integrally to the guide member 62. By rotationally driving the lead screw with the drive motor, the guide member 62 having the lead nut screwed onto the lead screw moves along the intersectional direction W.

The leading edge regulation part 65 is disposed above the downstream side of the placement part 61 in the conveyance direction F. The leading edge regulation part 65 regulates the leading edges of the products Q after working discharged from the working device 2 in the conveyance direction F. This allows the products Q to be stacked on the placement part 61 with their leading edges aligned. The leading edge regulation part 65 is suspended from a support frame 63 and includes a plurality of hanging members arranged in the intersectional direction W. The support frame 63 is configured to move along the height direction Z by a vertical direction actuator 74 functioning as a leading edge regulation part drive device and to move along the conveyance direction F by a front-rear direction actuator 75 functioning as a leading edge regulation part drive device. That is, in this embodiment, the vertical direction actuator 74 is an example of the leading edge regulation part drive device, and the front-rear direction actuator 75 is an example of the leading edge regulation part drive device.

The vertical direction actuator 74 includes, for example, a drive motor that functions as a drive device, a lead screw that is fixed integrally to the rotary shaft of the drive motor, and a lead nut that is screwed onto the lead screw and fixed integrally to the support frame 63. By rotationally driving the lead screw with the drive motor, the support frame 63 having the lead nut screwed onto the lead screw moves along the height direction Z, and the leading edge regulation part 65 supported by the support frame 63 moves along the height direction Z. Hence, the leading edge regulation part 65 can move up and down between a lower regulating position as shown in Fig. 3 and an upper retracted position as shown in Fig. 4.

The regulating position of the leading edge regulation part 65 shown in Fig. 3 is used when stacking the products Q while regulating the leading edges of the products Q. The retracted position shown in Fig. 4 is used when conveying the stacked products R downstream in the conveyance direction F. The retracted position shown in Fig. 4 is also used when the guide member 62 moves along the intersectional direction W depending on the size of the products Q.

The front-rear direction actuator 75 includes, for example, a drive motor that functions as a drive device, a lead screw that is fixed integrally to the rotation shaft of the drive motor, and a lead nut that is screwed onto the lead screw and fixed integrally to the support frame 63. By rotationally driving the lead screw with the drive motor, the support frame 63 having the lead nut screwed onto the lead screw moves along the conveyance direction F, and the leading edge regulation part 65 supported by the support frame 63 moves along the conveyance direction F. The front-rear direction actuator 75 is used when sliding the leading edge regulation part 65 in the front-rear direction of the conveyance direction F depending on the size of the product Q to be stacked.

As shown in Fig. 2, the stacking controller 66 is electrically connected to the conveyance drive device 71, the guide member drive device 72, the vertical direction actuator 74, the front-rear direction actuator 75, a guide member position sensor 76, a product detection sensor 77, and a stacking communication part 78. The stacking controller 66 has a processor such as CPU and a storage such as RAM and ROM. The stacking controller 66 controls various types of action in the stacking device 6. The working communication part 18 of the working device 2 and the stacking communication part 78 of the stacking device 6 are linked together and exchange various types of information via wired or wireless communication.

The guide member position sensor 76 detects the position of the guide member 62 in the intersectional direction W. The guide member position sensor 76 is disposed at the end of the guide member drive device 72 and is a sensor or switch that indicates the origin of the guide member 62. The guide member 62 moves to the origin position at the start of a job and then moves to a position adapted for the product Q to be fed. At this time, the movement distance of the guide member 62 from the origin position is stored as history information so that the position of the guide member 62 is detected based on the history information.

The product detection sensor 77 functioning as a product detection part detects whether the discharged product Q is placed on the placement surface of the placement part 61.
The product detection sensor 77 may be, for example, a physical detection sensor in which a plurality of optical sensors are arranged in the intersectional direction W, but a mode may also be employed that detects the product Q by software based on the control history of the stacking controller 66.
In the case of the mode detecting the product by software, it cannot be determined whether the product Q is on the placement part 61 immediately after the stacking device 6 is turned on.
Hence, the stacking controller 66 provides control to start the job from a state where no product Q is on the placement part 61 by performing action of conveying the product Q downstream as initialization action.

The stacking controller 66 is electrically connected to the drive motors of the conveyance drive device 71, guide member drive device 72, and vertical direction actuator 74 and front-rear direction actuator 75 functioning as the leading edge regulation part drive devices. These drive motors are, for example, stepping motors. The stacking controller 66 controls the drive amount of the drive motor of the conveyance drive device 71 to adjust the movement amount of the product Q in the conveyance direction F.

The stacking controller 66 controls the drive amount of the stepping motor of the guide member drive device 72 to adjust the position of the guide member 62 in the intersectional direction W.

The stacking controller 66 controls the drive amount of the drive motor of the vertical direction actuator 74 to adjust the position of the leading edge regulation part 65 in the height direction Z. When the guide member 62 is moved left and right in the intersectional direction W in response to a change in the feed position or size of the product Q, the leading edge regulation part 65 is moved to a retracted position (shown in Fig. 4) retracted upward with respect to the conveyance path 10. The stacking controller 66 controls the drive amount of the drive motor of the front-rear direction actuator 75 to adjust the position of the leading edge regulation part 65 in the conveyance direction F.

### Action of Stacking Device

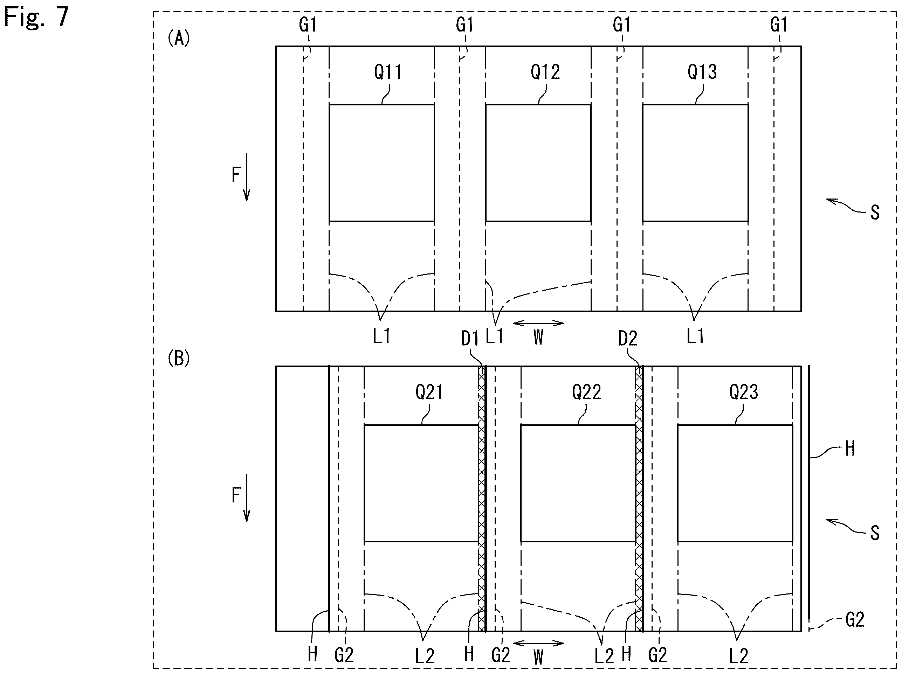

Action of the stacking device 6 will be described with reference to Figs. 6A, 6B and 7.

Figs. 6A and 6B are diagrams for explaining interference avoidance positions H of the pair of guide members 62 when the first products Q11 to Q13 and the second products Q21 to Q23 have the same size in the intersectional direction W but when a first side edge position L1 of the first products Q11 to Q13 and a second side edge position L2 of the second product Q21 to Q23 are different in the intersectional direction. As used herein, one side refers to the side marked with the alphabet F indicating the conveyance direction in Figs. 6A and 6B, and the other side refers to the side marked with the alphabet S indicating a sheet in Figs. 6A and 6B.

As a case where the first products and the second products are each fed in the same number of rows in the intersectional direction W, a case will be described where they are each fed in three rows as shown in Figs. 6A and 6B. For example, two adjacent first products Q11 and Q12 include: a certain first product Q11; and another first product Q12 located adjacent to the certain first product Q11. For example, two adjacent second products Q21 and Q22 include: a certain second product Q21 conveyed to a position that overlaps with the certain first product Q11 in the intersectional direction W but does not overlap with the another first product Q12; and another second product Q22 located adjacent to the certain second product Q21 in the intersectional direction W and conveyed to a position that overlaps with the another first product Q12 in the intersectional direction W but does not overlap with the certain first product Q11. The certain first product Q11 and the another second product Q22 form a certain set in which they are diagonally spaced apart, and the another first product Q12 and the certain second product Q21 form another set in which they are diagonally spaced apart. Similarly, between a certain first product Q12 and another first product Q13 adjacent to each other and a certain second product Q22 and another second product Q23 adjacent to each other, a certain set is formed in which the certain first product Q12 and the another second product Q23 are diagonally spaced apart, and another set is formed in which the another first product Q13 and the certain second product Q22 are diagonally spaced apart. An interference avoidance position H, which will be described later, is located in interference avoidance areas D1 and D2 formed in the "set with the shorter separation length" among "the separation length between the closest first and second side edge positions in the certain set" and "the separation length between the closest first and second side edge positions in the another set".

When the first products Q11 to Q13 and the second products Q21 to Q23 are fed in the same number of rows, i.e., in three rows in the intersectional direction W, they have the following relationship. The first product Q11 on one side, the first product Q12 at the center, and the first product Q13 on the other side are fed as the first products such that the first product Q11 on one side and the first product Q12 at the center have the relationship between a certain first product and another first product and that the first product Q12 at the center and the first product Q13 on the other side have the relationship between a certain first product and another first product. The second product Q21 on one side, the second product Q22 at the center, and the second product Q23 on the other side are fed as the second products such that the second product Q21 on one side and the second product Q22 at the center have the relationship between a certain second product and another second product and that the second product Q22 at the center and the second product Q23 on the other side have the relationship between a certain second product and another second product.

When the second products Q21 to Q23 are shifted to the other side in the intersectional direction W relative to the first products Q11 to Q13, interference avoidance areas include: an interference avoidance area D1 on one side, in which the guide member 62c on one side of the pair of guide members 62b and 62c that align the central second product Q22 is located between the second product Q21 on one side and the central first product Q12; and an interference avoidance area D2 on the other side, in which the guide member 62b on the other side of the pair of guide members 62b and 62c that align the central second product Q22 is located between the first product Q13 on the other side and the central second product Q22. On the other hand, when the second products Q21 to Q23 are shifted to one side in the intersectional direction W relative to the first products Q11 to Q13, the interference avoidance areas include: an interference avoidance area D1 on one side where the guide member 62c on one side of the pair of guide members 62b and 62c that align the central second product Q22 is located between the first product Q11 on one side and the central second product Q22; and an interference avoidance area D2 on the other side where the guide member 62b on the other side of the pair of guide members 62b and 62c that align the central second product Q22 is located between the second product Q23 on the other side and the central first product Q12.

Fig. 6A illustrates an example in which three rows of first products Q11 to Q13, namely, the first product Q11 on one side, the first product Q12 at the center, and the first product Q13 on the other side, are arranged side by side in the intersectional direction W on the sheet S. Fig. 6B illustrates an example in which three rows of second products Q21 to Q23, namely, the second product Q21 on one side, the second product Q22 at the center, and the second product Q23 on the other side, are arranged side by side in the intersectional direction W on the sheet S. The second product Q21 on one side is discharged to a position where at least a portion thereof overlaps with the first product Q11 on one side, the second product Q22 at the center is discharged to a position where at least a portion thereof overlaps with the first product Q12 at the center, and the second product Q23 on the other side is discharged to a position where at least a portion thereof overlaps with the first product Q13 on the other side.

In Fig. 6A, the three rows of the first products Q11 to Q13 are cut according to the first cutting positions L1 by the slitter 20 of the working device 2. The first cutting positions L1 correspond to each of the first side edge positions L1 of the cut three rows of the first products Q11 to Q13 in the intersectional direction W.

In Fig. 6A, a pair of guide members 62 (not shown) are located at waiting positions G1 that provide a separation length in the intersectional direction W that does not interfere with the three rows of first products Q11 to Q13. The waiting position G1 is, for example, an intermediate position between a side edge on one side of the sheet S and a side edge on one side of the first product Q11 that is closer to the side edge on one side of the sheet S. The waiting position G1 is, for example, an intermediate position between a side edge of the first product Q11 on one side that is closer to the central first product Q12 and a side edge of the central first product Q12 that is closer to the first product Q11 on one side. The waiting position G1 is, for example, an intermediate position between a side edge of the central first product Q12 that is closer to the first product Q13 on the other side and a side edge of the first product Q13 on the other side that is closer to the central first product Q12. The waiting position G1 is, for example, an intermediate position between a side edge of the first product Q 13 on the other side that is closer to the other side edge of the sheet S and the other side edge of the sheet S. In other words, the waiting positions G1 located between the first products Q11 to Q13 are, for example, located at the intermediate positions of the cutting scraps J in the sheet S shown in Fig. 5.

In Fig. 6B, the three rows of the second products Q21 to Q23 are cut according to second cutting positions L2 by the slitter 20 of the working device 2. The second cutting positions L2 correspond to the second side edge positions L2 of the cut three rows of the second products Q21 to Q23 in the intersectional direction W.

In Fig. 6B, it is considered that the pair of guide members 62 are located at imaginary waiting positions G2 that provide a separation length in the intersectional direction W that does not interfere with the three rows of second products Q21 to Q23. The imaginary waiting position G2 is, for example, (1) a position closer to the second product Q21 on one side than the intermediate position between the side edge on one side of the sheet S and the second product Q21 on one side, (2) an intermediate position between the second product Q21 on one side and the second product Q22 at the center, (3) an intermediate position between the second product Q22 at the center and the second product Q23 on the other side, or (4) a position that protrudes outward from the side edge of the sheet S on the other side.

However, at the imaginary waiting positions G2 of (1) to (3), the pair of guide members 62 interfere with the first products Q11 to Q13. That is, as to (1), among the pair of guide members 62c and 62d on one side for aligning the second product Q21 on one side, the third guide member 62c located on the central second product Q22 side interferes with the central first product Q12 when it lies at the imaginary waiting position G2.
As to (2), among the pair of guide members 62b and 62c at the center for aligning the central second product Q22, the third guide member 62c on the central second product Q22 side and the second guide member 62b on the side of the second product Q23 on the other side interfere with the central first product Q12 and the first product Q13 on the other side, respectively, when they lie at the imaginary waiting positions G2.
As to (3), among the pair of guide members 62a and 62b on the other side for aligning the second product Q23 on the other side, the second guide member 62b located on the central second product Q22 side interferes with the central first product Q12 when it lies at the imaginary waiting position G2.

It is also possible to move the positions of the pair of guide members 62 to the imaginary waiting positions G2 in advance before the second products Q21 to Q23 are fed to the placement part 61 so that one and the other of the pair of guide members 62 do not interfere with the second products Q21 to Q23, but this has the following deficiencies.

That is, a large driving force needs to be applied to the pair of guide members 62 in order to move stacked products R each composed of a multiplicity of the first products Q11 to Q13 stacked, and the stacked state of the stacked products R may collapse when they are moved.

In order to avoid such deficiencies, the pair of guide members 62c and 62d on one side, the pair of guide members 62b and 62c at the center, and the pair of guide members 62a and 62b on the other side are controlled to move to interference avoidance positions H in the intersectional direction W so as not to interfere with the corresponding first products Q11 to Q13 and the corresponding second products Q21 to Q23. As described later, the interference avoidance positions H lie, for example: at a position apart a predetermined length toward one side from one side edge of the first product Q11 on one side; between one side edge of the central first product Q12 and the other side edge of the second product Q21 on one side; between one side edge of the first product Q13 on the other side and the other side edge of the central second product Q22; and at a position (i.e., imaginary waiting position G2) apart a predetermined length toward the other side from the other side edge of the first product Q13 on the other side.

Among the pair of guide members 62c and 62d on one side for aligning the second product Q21 on one side, the third guide member 62c located on the central second product Q22 side lies in the interference avoidance area D1 on one side.

The interference avoidance area D1 on one side is formed in the intersectional direction W between the first side edge position L1 on one side (first cutting position L1 on one side) of the central first product Q12 and the second side edge position L2 on the other side (second cutting position L2 on the other side) of the second product Q21 on one side. Here, the interference avoidance area D1 on one side does not include the second side edge position L2 on the other side (second cutting position L2 on the other side) of the second product Q21 on one side, but includes the first side edge position L1 on one side (first cutting position L1 on one side) of the central first product Q12. This makes it possible to prevent the third guide member 62c located on the central second product Q22 side from interfering with the second product Q21 on one side, which is fed following the first products Q11 to Q13.

For example, the third guide member 62c located on the central second product Q22 side lies at an interference avoidance position H that is close to the imaginary waiting position G2 in the interference avoidance area D1 on one side and that is the same position as the first cutting position L1 located on one side of the central first product Q12. This makes it possible to ensure an appropriate separation length between the third guide member 62c located on the central second product Q22 side of the pair of guide members 62c and 62d on one side and the other side edge of the second product Q21 on one side.

In the pair of guide members 62c and 62d on one side for aligning the second product Q21 on one side, the fourth guide member 62d on the side of one side edge of the sheet S lies at an interference avoidance position H identical to the waiting position G1 that is on the side of one side edge of the sheet S relative to the first product Q 11 on one side; that is apart a predetermined length from the second cutting position L2; and that is apart a predetermined length from the first cutting position L1. As a result, the second product Q21 on one side is fed based on the first cutting position L1 on the side of one side edge of the sheet S of the first product Q11 on one side, so that the stacked state of the first product Q11 on one side can be maintained.

In the pair of central guide members 62b and 62c for aligning the central second product Q22, the third guide member 62c on the side of the second product Q21 on one side is located in the interference avoidance area D1 on one side, and the second guide member 62b on the side of the second product Q23 on the other side is located in the interference avoidance area D2 on the other side. The interference avoidance area D1 on one side has been described above, so that description thereof will be omitted.

The interference avoidance area D2 on the other side is formed in the intersectional direction W between a first side edge position L1 on one side (first cutting position L1 on one side) of the first product Q13 on the other side and a second side edge position L2 on the other side (second cutting position L2 on the other side) of the second product Q22 at the center. Here, the interference avoidance area D2 on the other side does not include the second side edge position L2 on the other side (second cutting position L2 on the other side) of the second product Q22 at the center, but includes the first side edge position L1 on one side (first cutting position L1 on one side) of the first product Q13 on the other side. This makes it possible to prevent the second guide member 62b on the side of the second product Q23 on the other side from interfering with the other side edge of the central second product Q22, which is fed following the first products Q11 to Q13.

For example, the second guide member 62b on the side of the second product Q23 on the other side lies at an interference avoidance position H that is the position closest to the imaginary waiting position G2 in the interference avoidance area D2 on the other side and that is the position identical to the first cutting position L1 on one side of the first product Q13 on the other side. This makes it possible to ensure an appropriate separation length between the second guide member 62b on the side of the second product Q23 on the other side of the pair of central guide members 62b and 62c and the other side edge of the central second product Q22.

Hence, in the pair of central guide members 62b and 62c for aligning the central second product Q22, the third guide member 62c on one side is located in the interference avoidance area D1 on one side, and the second guide member 62b on the other side is located in the interference avoidance area D2 on the other side. As a result, the central second product Q22 fed following the central first product Q12 is placed on the placement part 61 of the stacking device 6 without interfering with the pair of central guide members 62b and 62c.

In the pair of guide members 62a and 62b on the other side for aligning the second product Q23 on the other side, the second guide member 62b on the side of the central second product Q22 is located in the interference avoidance area D2 on the other side. The interference avoidance area D2 on the other side has been described above, so that description thereof will be omitted.

In the pair of guide members 62a and 62b on the other side for aligning the second product Q23 on the other side, the first guide member 62a on the side of the other side edge of the sheet S lies at an interference avoidance position H identical to the imaginary waiting position G2 that is on the side of the other side edge of the sheet S relative to the first product Q 13 on the other side; that is apart a predetermined length from the second cutting position L2; and that is apart a predetermined length from the first cutting position L1. This makes it possible to ensure an appropriate separation length between the first guide member 62a on the side of the other side edge of the sheet S of the pair of guide members 62a and 62b on the other side and the other side edge of the second product Q23 on the other side.

Thus, the second products Q21 to Q23 fed following the first products Q11 to Q13 are placed on the placement part 61 of the stacking device 6 without interfering with the pair of guide members 62.

Fig. 7 is a diagram illustrating the interference avoidance position H of a pair of guide members 62 when the sizes in the intersectional direction W differ between the first products Q11 to Q13 and the second products Q21 to Q23 and when the positions in the intersectional direction W differ between the first side edge position L1 of the first products Q11 to Q13 and the second side edge position L2 of the second products Q21 to Q23.

The case shown in Fig. 7 where the first products Q11 to Q13 and the second products Q21 to Q23 have different sizes in the intersectional direction W is similar to the case shown in Figs. 6A and 6B where the first products Q11 to Q13 and the second products Q21 to Q23 have the same size in the intersectional direction W. That is, based on the first side edge position L1 and the second side edge position L2, the pair of guide members 62 are positioned at an interference avoidance position H where at least one of the pair of guide members 62 does not interfere with the first products Q11 to Q13 and the second products Q21 to Q23 in the intersectional direction W. As a result, the second products Q21 to Q23 fed following the first products Q11 to Q13 are placed on the placement part 61 of the stacking device 6 without interfering with the pair of guide members 62.

Since the size of the second products Q21 to Q23 in the intersectional direction W is larger than the size of the first products Q11 to Q13 in the intersectional direction W, the second product Q22 at the center is aligned so as to protrude to both one side and the other side in the intersectional direction W from the first product Q12 at the center, and the protruding length on one side and the protruding length on the other side are the same. The second product Q21 on one side is aligned so as to protrude to one side from the first product Q11 on one side. The second product Q23 on the other side is aligned so as to protrude to the other side from the first product Q13 on the other side. This makes it possible to ensure a large separation length between the aligned products Q, so that the number of guide members 62 to be disposed can be reduced and the products can be sorted more definitely.

### Action in Machining processing device

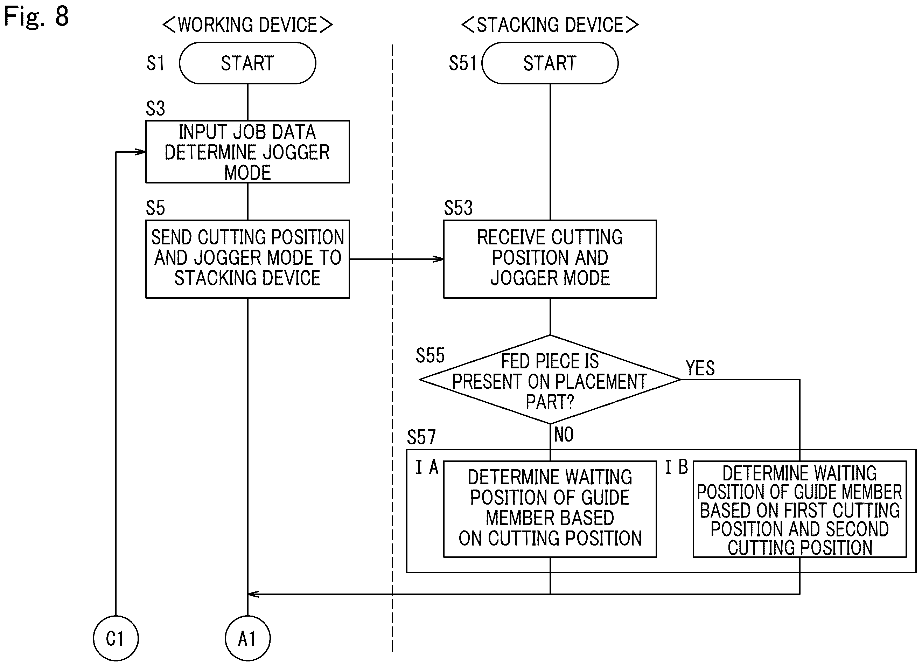

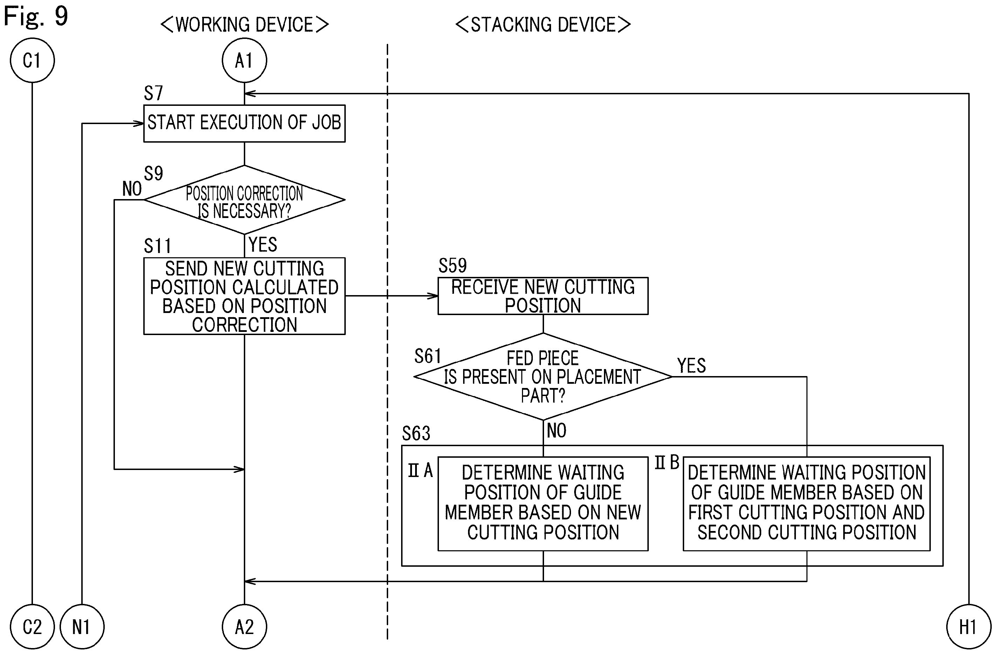

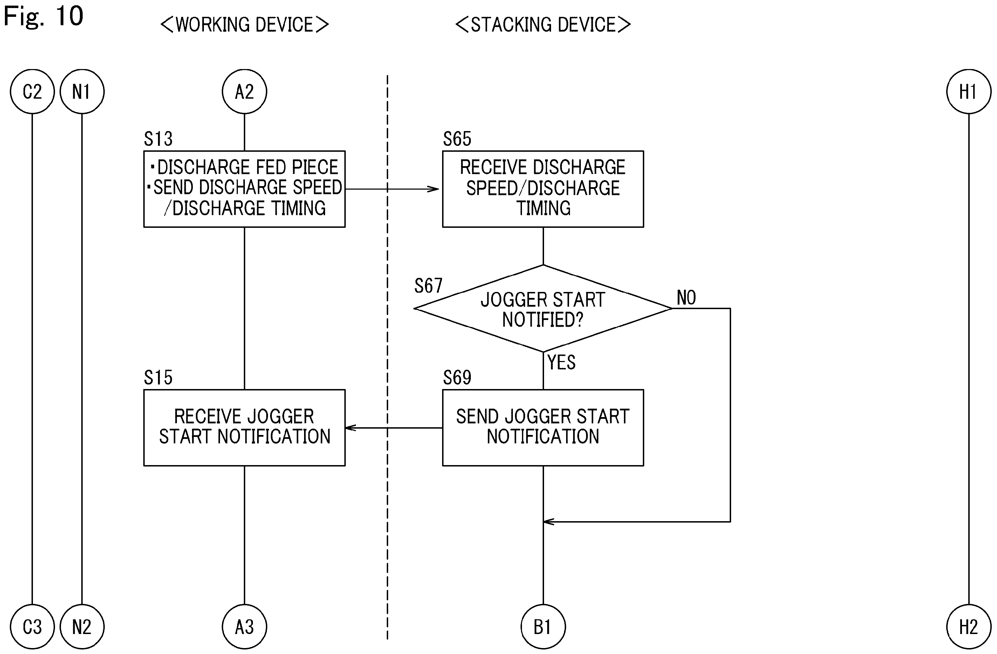

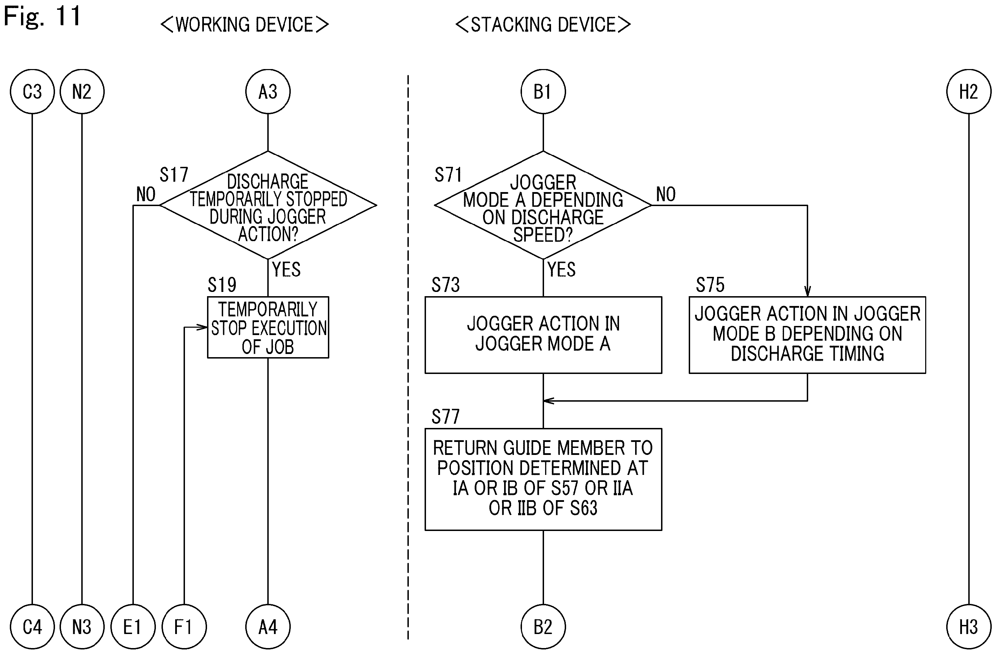

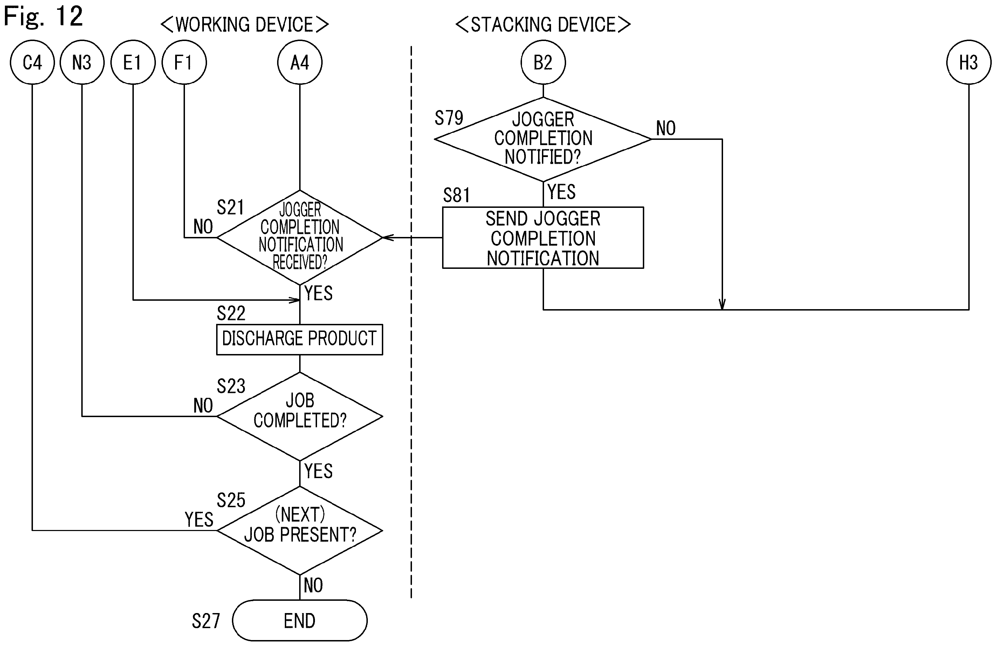

Action of the working device 2 and the stacking device 6 in the machining processing device 1 will be described with reference to Figs. 8 to 12.

In the case where the product Q worked by the working device 2 is fed to the stacking device 6, the processing controller 16 controls the working device 2 to start action (step S1). The processing controller 16 determines a jogger mode (e.g., jogger mode A or jogger mode B) based on various pieces of working information (job data) input through the reading sensor 26 or the operation panel (step S3). This allows the guide member 62 to wait at a position corresponding to the changed working content of the sheet S when the working content of the sheet S is changed. The processing controller 16 sends information such as the input number of sheets to be processed and number sheets to be sorted of the products Q after working to the stacking device 6 as information on the side edge positions (e.g., the first side edge position L1 and the second side edge position L2) of the product Q and on the jogger mode (e.g., the jogger mode A or the jogger mode B) (step S5).

At the same time that action of the working device 2 is started, action of the stacking device 6 is started (step S51). The stacking controller 66 of the stacking device 6 receives via the stacking communication part 78 information on the cutting position (e.g., the first cutting position L1 or the second cutting position L2) of the product Q and the jogger mode (e.g., the jogger mode A or the jogger mode B) sent from the working communication part 18 of the working device 2 (step S53). The stacking controller 66 calculates information on the side edge positions of the product Q (e.g., the first side edge position L1 of the first product Q and the second side edge position L2 of the second product Q) from the information on the cutting positions (e.g., the first cutting position L1 and the second cutting position L2) of the product Q.

The stacking controller 66 determines whether the product Q is placed on the placement part 61 of the stacking device 6 (step S55).

If the product Q is not placed on the placement part 61, the stacking controller 66 determines the waiting position G1 of the guide member 62 based on the information on the first side edge position L1 of the first product Q (IA of step S57), and notifies the processing controller 16 of the information regarding the determination of the waiting position G1. If the product Q is placed on the placement part 61, the stacking controller 66 determines the interference avoidance position H of the guide member 62 based on the information on the first side edge position L1 of the first product Q and the second side edge position L2 of the second product Q (IB of step S57), and notifies the processing controller 16 of the information regarding the determination of the interference avoidance position H of the guide member 62.

When the processing controller 16 receives information regarding the determination of the waiting position G1 or the interference avoidance position H of the guide member 62 from the stacking controller 66, it issues an instruction to start execution of the working process (job) (step S7).

The processing controller 16 controls the conveyance part 4 to convey the sheet S along the conveyance path 10. The position information providing portion (position mark) M1 formed on the sheet S being conveyed is read by the reading sensor 26. The processing controller 16 determines whether position correction is necessary due to the occurrence of positional deviation of the sheet S being conveyed (step S9). If position correction is not necessary (NO at step S9), the procedure proceeds to A2.

If position correction is necessary (YES at step S9), the processing controller 16 calculates a new cutting position based on the position correction and sends information about the calculated new cutting position to the stacking device 6 (step S11). This allows the guide member 62 to wait at the waiting position G1 that corresponds to the positional deviation that occurs during the conveyance of the sheet S.

The stacking controller 66 receives information on the new cutting position from the working device 2 via the stacking communication part 78. The stacking controller 66 calculates information on the new side edge position of the product Q (e.g., the new first side edge position L1 of the first product Q and the new second side edge position L2 of the second product Q) from information on the new cutting position of the product Q (e.g., the new first cutting position L1 and the second cutting position L2).

The stacking controller 66 determines whether the product Q is placed on the placement part 61 of the stacking device 6 (step S61).

If the product Q is not placed on the placement part 61, the stacking controller 66 determines a new waiting position G1 of the guide member 62 based on information on the new first side edge position L1 of the product Q (IIA at step S63) and notifies the processing controller 16 of information regarding the determination of the new waiting position G1. If the product Q is placed on the placement part 61, the stacking controller 66 determines a new interference avoidance position H of the guide member 62 based on information on the new first side edge position L1 of the first product Q and the new second side edge position L2 of the second product Q (IIB at step S63) and notifies the processing controller 16 of information regarding the determination of the new interference avoidance position H of the guide member 62.

When the processing controller 16 receives information on the determination of the waiting position G1 or the interference avoidance position H of the guide member 62 from the stacking controller 66, it issues an instruction to start discharging (conveying to the placement part 61 of the stacking device 6) the product Q worked by the processing parts 20, 21, and 22 (step S13). At this time, the processing controller 16 notifies the stacking controller 66 of the conditions (discharging speed/discharging timing) for discharging (conveying to the placement part 61 of the stacking device 6) the product Q.

The stacking controller 66 receives information regarding the discharge conditions of the product Q (conditions for conveying the product Q to the placement part 61 of the stacking device 6) from the working device 2 via the stacking communication part 78.

After receiving the information on the discharge conditions of the product Q, the stacking controller 66 determines whether a notification of the start of the jogger action (i.e., the alignment action) has been given (step S67). If the information on the start of the jogger action has not been given (NO at step S67), the procedure proceeds to B1.

If the information regarding the start of the jogger action is notified (YES at step S67), the stacking controller 66 sends the information regarding the start of the jogger action to the working device 2 (step S69). The processing controller 16 receives the information regarding the start of the jogger action from the stacking device 6 (step S15).

In the stacking device 6, the stacking controller 66 determines whether to perform the jogger action in the jogger mode A adapted for the discharge speed (step S71). When performing the jogger action in the jogger mode A (YES at step S71), the stacking controller 66 controls the guide member 62 to perform the jogger action in the jogger mode A adapted for the discharge speed (step S73). Since the jogger action of the products Q is started based on the discharge speed of the products Q, the jogger action is started after the products Q are securely stacked, improving the alignment of the products Q.

If the jogger action in the jogger mode A is not performed (NO at step S71), the stacking controller 66 controls the guide member 62 to perform the jogger action in the jogger mode B adapted for the timing of discharge (step S75). In the jogger mode B, the product detection sensor 77 detects the completion of discharge of the product Q to the placement part 61, and the stacking controller 66 controls the pair of guide members 62 to start the jogger action of the product Q when a predetermined time has elapsed after the completion of discharge of the product Q detected by the product detection sensor 77. As a result, the jogger action is started based on a preset schedule, so that the jogger action can be completed within a set time. The timing of the start of the jogger action can be controlled by the time setting, and the discharge interval can be shortened by shortening the set time, and the product Q can be aligned after it is reliably stacked by lengthening the set time.

After performing the jogger action in jogger mode A or jogger mode B, the stacking controller 66 controls the guide member 62 to return the guide member 62 to the waiting position G1 determined at step IA or IB of step S57 or IIA or IIB of step S63 (step S77).

The stacking controller 66 determines whether information regarding the completion of the jogger action has been notified (step S79). If information regarding the completion of the jogger action has not been notified (NO at step S79), the stacking controller 66 proceeds from H3 to H1, and then proceeds to the process prior to step S7. If information regarding the completion of the jogger action has been notified (YES at step S79), the stacking controller 66 sends information regarding the completion of the jogger action to the working device 2 (step S81). The working device 2 that has received the information regarding the completion of the jogger action discharges the next product Q (step S22). This makes it possible to prevent the discharged product Q from colliding with the guide member 62.

On the other hand, in the working device 2, after receiving information on the start of the jogger action from the stacking device 6 at step S15, the processing controller 16 determines whether the discharge of the product Q has been temporarily stopped during the execution of the jogger action (step S17). If the discharge of the product Q has not been temporarily stopped during the execution of the jogger action (NO at step S17), the processing controller 16 proceeds to E1. If the discharge of the product Q has been temporarily stopped during the execution of the jogger action (YES at step S17), the processing controller 16 controls the execution of the working process (job) to be temporarily stopped (step S19). If the jogger action is being executed, the discharge of the next product Q is temporarily stopped. Even if the jogger action is being executed, if the guide member 62 has moved to a position where it will not collide with the next product Q to be discharged, the notification of information on the completion of the jogger action is canceled even though the jogger action is not completed.

The processing controller 16 then determines whether information on the completion of the jogger action has been received from the stacking device 6 (step S21). If the information on the completion of the jogger action has not been received from the stacking device 6 (NO at step S21), the processing controller 16 proceeds to F1 and then controls the execution of the working process (job) to be temporarily stopped (step S19). If the information on the completion of the jogger action has been received from the stacking device 6 (YES at step S21), the processing controller 16 determines whether the working process (job) has been completed (step S23).

If the processing (job) is not complete (NO at step S23), the procedure proceeds from N3 to N1, and then to step S7. If the processing (job) is complete (YES at step S23), the processing controller 16 determines whether there is a next processing (job) (step S25).

If there is a next working process (job) (YES at step S25), the procedure proceeds from C4 to C1, and then to step S3. If there is no next working process (job) (NO at step S25), the processing controller 16 controls the working device 2 to complete the action (step S27).

Although the specific embodiment of the present disclosure has been described, the present disclosure is not limited to the above embodiment, and various modifications can be made within the scope of the present disclosure. For example, an appropriate combination of the contents described in the above embodiment may be one embodiment of the present disclosure. Furthermore, the specific numerals shown in the above embodiment are merely examples to facilitate understanding of the present disclosure, and do not limit the present disclosure.

The working device 2 can discharge the product Q to the stacking device 6 without being based on information regarding the completion of the jogger action. Not being based on information regarding the completion of the jogger action means, for example, that the stacking device 6 does not send information regarding the completion of the jogger action, or even if the stacking device 6 sends information regarding the completion of the jogger action, the working device 2 ignores the information and discharges the product Q at a predetermined time interval. In the former case, since there is no need to wait for receiving information regarding the completion of the jogger action, the working process of the sheet S can be completed quickly. In the latter case, since discharging at a predetermined time interval can prevent the discharge interval of the product Q from becoming long, the working process of the sheet S can be completed quickly.

In the case where the pair of guide members 62 are controlled to start the jogger action of the product Q when a predetermined time has elapsed after the completion of the discharge of the product Q, the predetermined time can be set as follows. For example, the predetermined time depending on the discharge speed is set in advance, and the predetermined time can be changed depending on the discharge speed. For example, in a working job, if the discharge speed is set to 50 cm/sec, the time can be set to 0.3 seconds, and if the discharge speed is set to 25 cm/sec, the time can be set to 0.5 seconds.

In the above embodiment, the first products Q11 to Q13 and the second products Q21 to Q23 are each fed as the products Q in three rows in the intersectional direction W. However, the present disclosure is applicable to: a case where one first product Q11 and one second product Q21 are each fed in one row in the intersectional direction W; a case where two first products Q11 and Q12 and two second products Q21 and Q22 are each fed in two rows in the intersectional direction W; and a case where four or more first products and four or more second products are each fed in the same number of rows in the intersectional direction W. The present disclosure is applicable even when the numbers of products are not the same, such as four first products and three second products, if an interference avoidance area can be set (or a guide member 62 can be arranged) between the products.

This invention is applied to a case where: a certain first product and another first product are adjacent to each other but spaced apart in the intersectional direction W; a certain second product and another second product are adjacent to each other but spaced apart in the intersectional direction W; and the former spacing and the latter spacing each allows a guide member 62 to be arranged therein. This invention is applied to a case where: a certain first product and a certain second product overlap with each other in the intersectional direction W; another first product and another second product overlap with each other in the intersectional direction W; a certain first product and another second product do not overlap with each other in the intersectional direction W; and another first product and a certain second product do not overlap with each other in the intersectional direction W; as well as to a combination having a shorter separation length between the combination of the first side edge position L1 of a certain first product and the second side edge position L2 of another second product and the combination of the first side edge position L1 of another first product and the second side edge position L2 of a certain second product.

In the above embodiment, in Figs. 6A and 6B, the second products Q21 to Q23 are fed shifted to the other side in the intersectional direction W relative to the first products Q11 to Q13, but the second products Q21 to Q23 may be fed shifted to one side in the intersectional direction W relative to the first products Q11 to Q13. In this case, the interference avoidance area D1 on one side is formed, for example, in the intersectional direction W, between the first side edge position L1 on the other side (the first cutting position L1 on the other side) of the first product Q11 on one side and the second side edge position L2 on one side (the second cutting position L2 on one side) of the second product Q22 at the center. The interference avoidance area D2 on the other side is formed, for example, in the intersectional direction W, between the first side edge position L1 on the other side (the first cutting position L1 on the other side) of the first product Q12 at the center and the second side edge position L2 on one side (the second cutting position L2 on one side) of the second product Q23 on the other side.

In this way, the interference avoidance position H can be determined, for example, based on the first side edge position L1 on one side of the central first product Q12 and the second side edge position L2 on the other side of the second product Q21 on one side, or based on the first side edge position L1 on the other side of the first product Q11 on one side and the second side edge position L2 on one side of the central second product Q22. However, there is a case where the separation length in the intersectional direction W between a certain first product and another first product is different from the separation length in the intersectional direction W between a certain second product and another second product or where the size in the intersectional direction W of the first product is different from the size in the intersectional direction W of the second product. In this case, the interference avoidance position H may be determined based on four side edge positions, for example, the first side edge position L1 on one side of the central first product Q12, the second side edge position L2 on the other side of the second product Q21 on one side, the first side edge position L1 on the other side of the first product Q11 on one side, and the second side edge position L2 on one side of the central second product Q22.

The present disclosure and the embodiment can be summarized as follows.

A stacking device 6 for products Q according to one aspect of the present disclosure is
a stacking device 6 that aligns in an intersectional direction W intersecting a conveyance direction F and stacks products Q conveyed along the conveyance direction F on a conveyance path 10, the stacking device 6 including:
a placement part 61 on which the products Q conveyed from the conveyance path 10 are placed;
a pair of guide members 62 that align the products Q by performing alignment action on both side edges in the intersectional direction W of the products Q placed on the placement part 61; and
a stacking processor 66 that controls positions of the pair of guide members 62 in the intersectional direction W, wherein
the products Q include first products Q11 to Q13, both edges of which in the intersectional direction W on the placement part 61 are at a first side edge position L1 and which are conveyed to the placement part 61 along the conveyance direction F, and second products Q21 to Q23, both edges of which in the intersectional direction W on the placement part 61 are at a second side edge position L2 and which are conveyed to the placement part 61 along the conveyance direction F, following the first products Q11 to Q13, and wherein
when the first side edge position L1 and the second side edge position L2 are different in the intersectional direction W, the stacking processor 66 controls, based on the first side edge position L1 and the second side edge position L2, the pair of guide members 62 so that at least one of the pair of guide members 62 moves in the intersectional direction W to an interference avoidance position H where it does not interfere with the first products Q11 to Q13 and the second products Q21 to Q23.

According to the above configuration, when the positions in the intersectional direction W of the first products Q11 to Q13 are different from those of the second products Q21 to Q23, at least one of the pair of guide members 62 moves to the interference avoidance position H where the at least one of the pair of guide members 62 does not interfere with the first products Q11 to Q13 and the second products Q21 to Q23 in the intersectional direction W, based on the first side edge position L1 and the second side edge position L2. This makes it possible to prevent at least one of the pair of guide members 62 from interfering with the first products Q11 to Q13 and the second products Q21 to Q23, even when the positions in the intersectional direction W of the first products Q11 to Q13 differ from those of the second products Q21 to Q23.

In the stacking device 6 according to one embodiment:
the first products Q11 to Q13 include a certain first product and another first product positioned adjacent to the certain first product in the intersectional direction W;
the second products Q21 to Q23 include a certain second product conveyed to a position that overlaps with the certain first product in the intersectional direction W but does not overlap with the another first product, and another second product positioned adjacent to the certain second product in the intersectional direction W and conveyed to a position that overlaps with the another first product in the intersectional direction W but does not overlap with the certain first product;
the certain first product and the other second product form a certain pair that are diagonally spaced apart, and the another first product and the certain second product form another pair that are diagonally spaced apart; and
the interference avoidance position H lies in interference avoidance areas D1 and D2 formed between the first side edge position and the second side edge position which are located closest to each other in the pair having a shorter separation length between the one pair and the other pair.

According to the above configuration, the guide member 62 is positioned in the interference avoidance areas D1 and D2, thereby enabling prevention of interference with the first products Q11 to Q13 and the second products Q21 to Q23.

In the stacking device 6 according to one embodiment:
when the first products Q11 to Q13 and the second products Q21 to Q23 are each fed in three rows in the intersectional direction W,
the first products Q11 to Q13 include a first product Q11 on one side, a first product Q12 at the center, and a first product Q13 on the other side, the first product Q11 on one side and the first product Q12 at the center having a relationship of the certain first product and the another first product, the first product Q12 at the center and the first product Q13 on the other side having a relationship of the certain first product and the another first product, and
the second products Q21 to Q23 include a second product Q21 on one side, a second product Q22 at the center, and a second product Q23 on the other side, the second product Q21 on one side and the second product Q22 at the center having a relationship of the certain second product and the another second product, the second product Q22 at the center and the second product Q23 on the other side having a relationship of the certain second product and the another second product;
when the second products Q21 to Q23 are shifted to the other side in the intersectional direction W relative to the first products Q11 to Q13,
the interference avoidance area includes an interference avoidance area D1 on one side, in which a guide member 62c on one side of a pair of guide members 62b and 62c for aligning the central second products Q22 lies between the second product Q21 on one side and the central first product Q12, and an interference avoidance area D2 on the other side, in which a guide member 62b on the other side of the pair of guide members 62b and 62c for aligning the central second products Q22 lies between the first product Q13 on the other side and the central second products Q22; and
when the second products Q21 to Q23 are shifted to one side in the intersectional direction W relative to the first products Q11 to Q13, the interference avoidance area includes an interference avoidance area D1 on one side, in which the guide member 62c on one side of the pair of guide members 62b and 62c for aligning the central second product Q22 lies between the first product Q11 on one side and the central second product Q22, and an interference avoidance area D2 on the other side, in which the guide member 62b on the other side of the pair of guide members 62b and 62c for aligning the central second product Q22 lies between the second product Q23 on the other side and the central first product Q12.

According to the above configuration, the guide member 62c on one side is positioned in the interference avoidance area D1 on one side and the guide member 62b on the other side is positioned in the interference avoidance area D2 on the other side, thereby enabling prevention of interference with the first products Q11 to Q13 and the second products Q21 to Q23.

In the stacking device 6 according to one embodiment:
when the second products Q21 to Q23 are shifted to the other side in the intersectional direction W relative to the first products Q11 to Q13, the guide member 62c on one side lies at the first side edge position L1, closer to the first product Q11 on one side, of the central first product Q12 in the interference avoidance area D1 on one side, and the guide member 62b on the other side lies at the first side edge position L1, closer to the central first product Q12, of the first product Q13 on the other side in the interference avoidance area D2 on the other side; and
when the second products Q21 to Q23 are shifted to one side in the intersectional direction W relative to the first products Q11 to Q13, the guide member 62c on one side lies at the first side edge position L1, closer to the central first product Q12, of the first product Q11 on one side in the interference avoidance area D1 on one side, and the guide member 62b on the other side lies at the first side edge position L1, closer to the first product Q13 on the other side, of the central first product Q12 in the interference avoidance area D2 on the other side.

According to the above configuration, a proper separation length can be secured between the guide member 62c on one side and the other side edge of the second product Q21 on one side, and a proper separation length can be secured between the guide member 62b on the other side and the other side edge of the central second product Q22.

In the stacking device 6 according to one embodiment,
the stacking processor 66 controls the pair of guide members 62 so that the second products Q21 to Q23 are aligned based on positions at which the first products Q11 to Q13 are aligned in the intersectional direction W.

According to the above configuration, the stacked state of the first products Q11 to Q13 can be maintained.

In the stacking device 6 according to one embodiment,
when the size in the intersectional direction W of the second products Q21 to Q23 is larger than that of the first products Q11 to Q13, the stacking processor 66 controls the pair of guide members 62 so that the second products Q21 to Q23 are aligned protruding outward in the intersectional direction W from the aligned first products Q11 to Q13.

According to the above configuration, a large separation length can be secured between the aligned products Q, so that the number of guide members 62 can be reduced and that the products Q can be sorted more definitely.

The stacking device 6 according to one embodiment further includes a leading edge regulation part 65 that regulates a leading edge in the conveyance direction F of the product Q fed to the placement part 61, wherein
the leading edge regulation part 65 is disposed on the downstream side of the placement part 61 in the conveyance direction F.

According to the above configuration, the products Q can be stacked onto the placement part 61 with the leading edges of the products Q aligned.

In the stacking device 6 according to one embodiment,
the stacking processor 66 controls the pair of guide members 62 so that the alignment action of the pair of guide members 62, which aligns the products Q, is performed in an area up to a position apart a predetermined length or more from the second side edge position L2.

According to the above configuration, the conveyed product Q can reliably be prevented from colliding with the pair of guide members 62.

A machining processing device 1 according to another aspect of the present disclosure includes:
a stacking device 6 for product Q that aligns and stacks, in an intersectional direction W intersecting a conveyance direction F, products Q conveyed along the conveyance direction F on a conveyance path 10, the stacking device 6 including
a placement part 61 on which the products Q conveyed from the conveyance path 10 are placed,
a pair of guide members 62 that align the products Q by performing alignment action on both side edges in the intersectional direction W of the products Q placed on the placement part 61, and
a stacking processor 66 that controls positions of the pair of guide members 62 in the intersectional direction W, wherein
the products Q include first products Q11 to Q13, both edges of which in the intersectional direction W on the placement part 61 are at a first side edge position L1 and which are conveyed to the placement part 61 along the conveyance direction F, and second products Q21 to Q23, both edges of which in the intersectional direction W on the placement part 61 are at a second side edge position L2 and which are conveyed to the placement part 61 along the conveyance direction F, following the first products Q11 to Q13, and wherein
when the first side edge position L1 and the second side edge position L2 in the intersectional direction W are different, the stacking processor 66 controls, based on the first side edge position L1 and the second side edge position L2, the pair of guide members 62 so that at least one of the pair of guide members 62 moves to an interference avoidance position H in the intersectional direction W where it does not interfere with the first products Q11 to Q13 and the second products Q21 to Q23; and
a working device 2 disposed upstream of the stacking device 6 in the conveyance direction F, wherein
the working device 2 forms side edges of the first products Q11 to Q13 by cutting a sheet S depending on a first cutting position L1 corresponding to the first side edge position L1 and forms side edges of the second products Q21 to Q23 by cutting the sheet S depending on a second cutting position L2 corresponding to the second side edge position L2.

According to the above configuration, when the positions of the first products Q11 to Q13 and the second products Q21 to Q23 in the intersectional direction W are different, at least one of the pair of guide members 62 moves to an interference avoidance position H where the pair of guide members 62 do not interfere with the first products Q11 to Q13 and the second products Q21 to Q23 in the intersectional direction W, based on the first side edge position L1 and the second side edge position L2. This makes it possible to prevent at least one of the pair of guide members 62 from interfering with the first products Q11 to Q13 and the second products Q21 to Q23, even when the positions of the first products Q11 to Q13 and the second products Q21 to Q23 in the intersectional direction Ware different.

In the machining processing device 1 according to one embodiment,
the working device 2 further includes a working information acquisition part 26 that acquires working process information from a working information providing portion M2 disposed on the sheet S, wherein
the working device 2 cuts the sheet S based on the working process information acquired through the working information acquisition part 26. The reading sensor 26 is an example of the working information acquisition part 26.

According to the above configuration, when the content of working of the sheet S is changed, the guide member 62 is allowed to wait at a position corresponding to the changed content of working of the sheet S.

In the machining processing device 1 according to one embodiment,
the working device 2 further includes a position information acquisition part 26 that acquires reference position information from the position information providing portion M1 disposed on the sheet S, wherein
the working device 2 corrects the cutting position of the sheet S based on the reference position information acquired through the position information acquisition part 26. The reding sensor 26 is an example of the position information acquisition part 26.

According to the above configuration, the guide member 62 is allowed to wait at a waiting position G1 corresponding to the positional deviation that occurs during the conveyance of the sheet S.

In the machining processing device 1 according to one embodiment,
the working device 2 further includes:
a conveyance part 4 that conveys the product Q along the conveyance path 10 and discharges the product Q onto the placement part 61 of the stacking device 6; and
a working processor 16 that controls conveyance of the product Q in cooperation with the stacking processor 66, wherein
the stacking processor 66 sends alignment completion information to the working processor 16, the information indicating that the pair of guide members 62 have completed alignment of the product Q placed on the placement part 61, and wherein
after receiving the alignment completion information from the stacking processor 66, the working processor 16 controls the conveyance part 4 to discharge the product Q from the working device 2 onto the placement part 61 of the stacking device 6.

According to the above configuration, the discharged product Q can be prevented from colliding with the guide member 62.

In the machining processing device 1 according to one embodiment,
the working device 2 further includes:
a conveyance part 4 that conveys the product Q along the conveyance path 10 and discharges the product Q onto the placement part 61 of the stacking device 6; and
a working processor 16 that controls conveyance of the product Q in cooperation with the stacking processor 66, wherein
the stacking processor 66 does not send information indicating that the pair of guide members 62 have completed alignment of the product Q to the processing controller 16, and wherein
the working processor 16 controls the conveyance part 4 so as to discharge the product Q from the working device 2 onto the placement part 61 of the stacking device 6 at predetermined time intervals.

According to the above configuration, the discharge intervals of the products Q can be prevented from becoming long by discharging the products Q at predetermined time intervals, so that the working process of the sheets S can be completed quickly.

In the machining processing device 1 according to one embodiment,
the working device 2 further includes:
a conveyance part 4 that conveys the product Q along the conveyance path 10 and discharges the product Q onto the placement part 61 of the stacking device 6; and
a working processor 16 that controls conveyance of the product Q in cooperation with the stacking processor 66, wherein
the stacking processor 66 sends alignment completion information indicating that the pair of guide members 62 have completed alignment of the product Q to the processing controller 16, and wherein
the processing controller 16 controls the conveyance part 4 to discharge the product Q from the working device 2 to the stacking device 6 at a predetermined time interval, not based on the alignment completion information.

According to the above configuration, since the waiting time for receiving the alignment completion information is not required, the working process of the sheet S can be completed quickly.

In the machining processing device 1 according to one embodiment,
the working device 2 further includes:
a conveyance part 4 that conveys the product Q along the conveyance path 10 and discharges the product Q onto the placement part 61 of the stacking device 6; and
a discharge speed detection part 37 for detecting a discharge speed of the product Q from the working device 2 to the placement part 61 of the stacking device 6, wherein
the stacking processor 66 controls the pair of guide members 62 to start the alignment action for aligning the products Q based on the discharge speed of the product Q detected by the discharge speed detection part 37.

According to the above configuration, the alignment action is started after the products Q are securely stacked, thereby improving the alignment of the products Q.

In the machining processing device 1 according to one embodiment,
the working device 2 further includes:
a conveyance part 4 that conveys the product Q along the conveyance path 10 and discharges the product Q onto the placement part 61 of the stacking device 6;
a discharge detection part 38 that detects completion of discharge of the product Q to the placement part 61; and
a product detection part 77 that detects a passage of at least one of the leading edge and the trailing edge of the product Q discharged from the working device 2 to the placement part 61 of the stacking device 6, wherein
the stacking processor 66 controls the pair of guide members 62 to start the alignment action to align the products Q when a predetermined time has elapsed after the product detection part 77 detects the passage of the leading or trailing edge of the product Q. The product detection sensor 77 is an example of product detection part 77.

According to the above configuration, the alignment action is started based on a preset schedule, so that the alignment action can be completed within a set time.

In the machining processing device 1 according to one embodiment,
the stacking processor 66 controls the pair of guide members 62 so that the alignment action of the pair of guide members 62, which aligns the products Q, is performed in an area up to a position apart a predetermined length or more from the second side edge position L2.

According to the above configuration, the conveyed product Q can reliably be prevented from colliding with the pair of guide members 62.

## Claims

1. A stacking device that aligns in an intersectional direction intersecting a conveyance direction and stacks products conveyed along the conveyance direction on a conveyance path, the stacking device comprising:
a placement part on which the products conveyed from the conveyance path are placed;
a pair of guide members that align the products by performing alignment action on both side edges in the intersectional direction of the products placed on the placement part; and
a stacking processor that controls positions of the pair of guide members in the intersectional direction, wherein
the products include:
i) first products, both edges of which in the intersectional direction on the placement part are at a first side edge position and which are conveyed to the placement part along the conveyance direction, and
ii) second products, both edges of which in the intersectional direction on the placement part are at a second side edge position and which are conveyed to the placement part along the conveyance direction, following the first products, and
when the first side edge position and the second side edge position are different in the intersectional direction, the stacking processor controls, based on the first side edge position and the second side edge position, the pair of guide members so that at least one of the pair of guide members moves in the intersectional direction to an interference avoidance position where it does not interfere with the first products and the second products.

2. The stacking device according to claim 1, wherein
the first products include a certain first product and another first product positioned adjacent to the certain first product in the intersectional direction,
the second products include:
a certain second product conveyed to a position that overlaps with the certain first product in the intersectional direction but does not overlap with the another first product, and
another second product positioned adjacent to the certain second product in the intersectional direction and conveyed to a position that overlaps with the another first product in the intersectional direction but does not overlap with the certain first product,
the certain first product and the other second product form a certain pair that are diagonally spaced apart, and the another first product and the certain second product form another pair that are diagonally spaced apart, and
the interference avoidance position lies in interference avoidance areas formed between the first side edge position and the second side edge position which are located closest to each other in the pair having a shorter separation length between the certain pair and the another pair.

3. The stacking device according to claim 2, wherein
when the first products and the second products are each fed in three rows in the intersectional direction onto the placement part,
i) the first products include a first product on one side, a first product at the center, and a first product on the other side,
the first product on one side and the first product at the center having a relationship of the certain first product and the another first product,
the first product at the center and the first product on the other side having a relationship of the certain first product and the another first product, and
ii) the second products include a second product on one side, a second product at the center, and a second product on the other side,
the second product on one side and the second product at the center having a relationship of the certain second product and the another second product,
the second product at the center and the second product on the other side having a relationship of the certain second product and the another second product,
wherein
when the second products are shifted to the other side in the intersectional direction relative to the first products,
the interference avoidance area includes an interference avoidance area on one side, in which a guide member on one side of a pair of guide members for aligning the central second products lies between the second product on one side and the central first product, and
an interference avoidance area on the other side, in which a guide member on the other side of the pair of guide members for aligning the central second products lies between the first product on the other side and the central second products, and
when the second products are shifted to one side in the intersectional direction relative to the first products,
the interference avoidance area includes an interference avoidance area on one side, in which the guide member on one side of the pair of guide members for aligning the central second product lies between the first product on one side and the central second product, and
an interference avoidance area on the other side, in which the guide member on the other side of the pair of guide members for aligning the central second product lies between the second product on the other side and the central first product.

4. The stacking device according to claim 3, wherein
when the second products are shifted to the other side in the intersectional direction relative to the first products,
the guide member on one side lies at the first side edge position, closer to the first product on one side, of the central first product in the interference avoidance area on one side, and
the guide member on the other side lies at the first side edge position, closer to the central first product, of the first product on the other side in the interference avoidance area on the other side, and
when the second products are shifted to one side in the intersectional direction relative to the first products,
the guide member on one side lies at the first side edge position, closer to the central first product, of the first product on one side in the interference avoidance area on one side, and
the guide member on the other side lies at the first side edge position, closer to the first product on the other side, of the central first product in the interference avoidance area on the other side.

5. The stacking device according to claim 1, wherein the stacking processor controls the pair of guide members so that the second products are aligned based on positions at which the first products are aligned in the intersectional direction.

6. The stacking device according to claim 1, wherein when the size in the intersectional direction of the second products is larger than that of the first products, the stacking processor controls the pair of guide members so that the second products are aligned protruding outward in the intersectional direction from the aligned first products.

7. The stacking device according to claim 1, further comprising:
a leading edge regulation part that regulates a leading edge in the conveyance direction of the product fed to the placement part, wherein
the leading edge regulation part is disposed on the downstream side of the placement part in the conveyance direction.

8. The stacking device according to claim 1, wherein the stacking processor controls the pair of guide members so that the alignment action of the pair of guide members, which aligns the products, is performed in an area up to a position apart a predetermined length or more from the second side edge position.

9. A machining processing device comprising:
a stacking device according to any one of claims 1 through 8; and
a working device disposed upstream of the stacking device in the conveyance direction, wherein
the working device forms side edges of the first products by cutting a sheet in accordance with a first cutting position corresponding to the first side edge position and forms side edges of the second products by cutting the sheet in accordance with a second cutting position corresponding to the second side edge position.

10. The machining processing device according to claim 9, wherein
the working device further comprises a working information acquisition part that acquires working process information from a working information providing portion disposed on the sheet, and
the working device cuts the sheet based on the working process information acquired through the working information acquisition part.

11. The machining processing device according to claim 9, wherein
the working device further comprises a position information acquisition part that acquires reference position information from the position information providing portion disposed on the sheet, and
the working device corrects the cutting position of the sheet based on the reference position information acquired through the position information acquisition part.

12. The machining processing device according to claim 9, wherein
the working device further comprises:
a conveyance part that conveys the product along the conveyance path and discharges the product onto the placement part of the stacking device; and
a working processor that controls the conveyance part in cooperation with the stacking processor, wherein
the stacking processor sends alignment completion information to the working processor, the information indicating that the pair of guide members have completed alignment of the product placed on the placement part, and
after receiving the alignment completion information from the stacking processor, the working processor controls the conveyance part to discharge the product from the working device onto the placement part of the stacking device.

13. The machining processing device according to claim 9, wherein
the working device further comprises:
a conveyance part that conveys the product along the conveyance path and discharges the product onto the placement part of the stacking device; and
a working processor that controls conveyance of the product in cooperation with the stacking processor, wherein
the stacking processor does not send information indicating that the pair of guide members have completed alignment of the product to the processing controller, and
the working processor controls the conveyance part so as to discharge the product from the working device onto the placement part of the stacking device at predetermined time intervals.

14. The machining processing device according to claim 9, wherein
the working device further comprises:
a conveyance part that conveys the product along the conveyance path and discharges the product onto the placement part of the stacking device; and
a working processor that controls conveyance of the product in cooperation with the stacking processor, wherein
the stacking processor sends alignment completion information indicating that the pair of guide members have completed alignment of the product placed on the placement part to the processing controller, and
the processing processor controls the conveyance part to discharge the product from the working device onto the placement part of the stacking device at a predetermined time interval, not based on the alignment completion information.

15. The machining processing device according to claim 9, wherein
the working device further comprises:
a conveyance part that conveys the product along the conveyance path and discharges the product onto the placement part of the stacking device; and
a discharge speed detection part for detecting a discharge speed of the product from the working device to the placement part of the stacking device, wherein
the stacking processor controls the pair of guide members to start the alignment action for aligning the products based on the discharge speed of the product detected by the discharge speed detection part.

16. The machining processing device according to claim 9, wherein
the working device further comprises:
a conveyance part that conveys the product along the conveyance path and discharges the product onto the placement part of the stacking device; and
a product detection part that detects a passage of at least one of the leading edge and the trailing edge of the product discharged from the working device to the placement part of the stacking device, wherein
the stacking processor controls the pair of guide members to start the alignment action to align the products when a predetermined time has elapsed after the product detection part detects the passage of the leading or trailing edge of the product.

17. The machining processing device according to claim 9, wherein
the stacking processor controls the pair of guide members so that the alignment action of the pair of guide members, which aligns the products, is performed in an area up to a position apart a predetermined length or more from the second side edge position.
